(19) Europäisches Patentamt
European Patent Office
Office européen des brevets

(11) **EP 1 832 531 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(51) Int Cl.:
***B65G 13/07*** *(2006.01)* ***B65G 13/08*** *(2006.01)*

(21) Anmeldenummer: **07100791.8**

(22) Anmeldetag: **19.01.2007**

(54) **Angetriebene Rollenbahnkurve und Förderbahn mit einer solchen Rollenbahnkurve**

Powered roller conveyor curve and conveyor belt with such a roller conveyor curve

Courbe de transrouleur mécanique et bande de transport doté d'une telle courbe de transrouleur mécanique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.03.2006 DE 102006011558**

(43) Veröffentlichungstag der Anmeldung:
**12.09.2007 Patentblatt 2007/37**

(73) Patentinhaber: **HaRo Anlagentechnik GmbH**
**59602 Rüthen (DE)**

(72) Erfinder: **Löseke, Markus**
**59602 Rüthen (DE)**

(74) Vertreter: **Patentanwälte**
**Dr. Solf & Zapf**
**Schlossbleiche 20**
**D-42103 Wuppertal (DE)**

(56) Entgegenhaltungen:
**DE-A1- 4 209 756          DE-B- 1 265 043**
**DE-U1- 9 214 827          US-A- 1 975 927**
**US-A- 3 275 124**

**Beschreibung**

Die vorliegende Erfindung betrifft eine angetriebene Rollenbahnkurve mit einer Mehrzahl von Förderrollen, die hintereinander quer zur kurvenförmigen Rollenbahn-Verlaufsrichtung, d. h. mit ihren Längsachsen von einer Außenseite zu einer Innenseite der Rollenbahnkurve weisend, drehbar angeordnet sind und mittels eines umlaufenden Antriebselementes antreibbar sind, wobei das umlaufende Antriebselement ein Flachgurt-Riemen ist, dessen Obertrum einerseits die Unterseiten der Förderrollen und andererseits die Oberseiten von unterhalb und zwischen den Förderrollen angeordneten, frei drehbaren Andruckrollen berührt, wobei die Andruckrollen Längsachsen aufweisen, die derart geneigt sind, dass der Flachgurt-Riemen in einem der Innenseite zugewandten Bereich gespannt wird, wobei in einem Untertrum des Flachgurt-Riemens der Flachgurt-Riemen mit Hilfe von frei drehbaren Führungsrollen derart umgelenkt und geführt ist, dass eine Breitseite des Flachgurt-Riemens im Wesentlichen senkrecht ausgerichtet ist.

Eine Rollenbahn verbindet die Vorteile eines preiswerten Förderers für Massentransporte mit den Anforderungen an eine platzsparende Lagerhaltung innerhalb von Produktionsflächen. Dabei dient der Transportweg gleichzeitig auch als Pufferfläche. So kommen die benötigten Waren direkt an die Verbraucherstellen und werden dort lagegerecht bereitgestellt. So bildet beispielsweise ein Rollenbahnsystem, das unter dem Namen Standfix® bekannt ist, eine optimale Problemlösung für den innerbetrieblichen Transport von leichten Gütern, die schnell transportiert werden müssen.

In einer angetriebenen Variante der vorstehend beschriebenen Rollenbahn-Familie die auch aus dem deutschen Gebrauchsmuster DE 93 03 984 U1 und unter dem Namen "ASF" bekannt ist, umfasst der Antriebsstrang eine Spannstation und eine Motorstation, die insbesondere einen Schneckengetriebemotor mit Antriebsrad enthält. Die bekannte Rollenbahn weist dabei eine Vielzahl von Förderrollen auf, die in Rollenbahn-Langsrichtung erstreckt und bei Anlage an der Mantelfläche der Rollen stellenweise jeweils zwischen zwei einander benachbarten Rollen zwecks Vergrößerung des Umschlingungswinkels um ein an seiner Oberfläche gerundetes Stützelement verlaufend geführt ist. Das Stützelement ist dabei als frei drehbare Andruckrolle ausgebildet. Dabei wird insbesondere ein flacher abriebfester Kunststoffgurt bzw. Flachgurt-Riemen über Röllchenleisten als Stützelemente geführt, wodurch eine äußerst geringe Reibung erreicht wird. Je nach Erfordernis kann der Gurt als Fest- oder Stauantrieb ausgelegt werden. Die Auswahl der Tragrollen richtet sich nach dem Fördergut. So können z. B. leichte Rollen mit Kunststoffrohr oder Rollen mit leicht laufendem Stahlkugellager und Stahlrohr eingesetzt werden. Das System, welches ein Belastungsspektrum umfasst, das bis zu etwa 800 kg/m reicht, zeichnet sich auch bei hoher Fördergeschwindigkeit, die im Bereich von etwa 7 bis 35 m/min liegen kann, durch einen angenehm leisen Lauf aus. Die Maximalbelastung pro laufenden Meter ergibt sich dabei aus Rollenausführung, Rollenteilung, Fußausführung und Abstand.

Zur Richtungsänderung des Fördergutes werden Rollenbahnkurven eingesetzt, bei denen in der Regel die Gradzahl des Umlenkwinkels je nach den Erfordernissen frei wählbar ist. Üblicherweise ermittelt man dabei den Innenradius der Kurve aus der Länge des Fördergutes durch Multiplikation mit dem Faktor 1,5. Die Mantellänge der Tragrollen ergibt sich aus der Fördergutbreite addiert mit einem Summanden von 100 mm. Überall dort, wo leichtes Fördergut manuell bewegt werden muss, finden nicht angetriebene Rollenbahnkurven mit zylindrischen Tragrollen Anwendung, wobei durch stabile Tragrollenprofile und verschweißte Brückenfüße die Belastung aufgenommen wird und die Tragrollen zwischen den Profilen verschraubt sind. Wo sich die Lage des Fördergutes relativ zur Förderrichtung nicht ändern soll, werden Kurvenrollenbahnen mit konischen Tragrollen eingesetzt, die als Ganzes mit variabler Mantellänge aus Stahl gefertigt sind oder die ihre Form beispielsweise durch konische Aufschiebelemente aus verschleißfestem Polyamid erhalten können. Die konischen Tragrollen laufen bei normaler Achsgeschwindigkeit außen schneller als innen, so dass das Gut in fester Relativlage zur Bahn gefördert wird und zum Beispiel ein nachgeschalteter Ausschleuser oder Pusher das Fördergut exakt positionieren kann, um eine Roboterübernahme sicherzustellen.

In vollautomatischen Förderanlagen werden als richtungsändernde Systeme angetriebene Rollenbahnkurven eingesetzt. Hierbei wird beispielsweise bekanntermaßen jeweils am Rollenende ein Kettenradantrieb bzw. ein Doppelkettenradantrieb eingesetzt. Dabei erfolgt der Antrieb über einen zentralen Stirnradgetriebemotor und wird durch Kettenkreise, die die umlaufenden Antriebselemente bilden, von Tragrolle zu Tragrolle weitergeleitet. Es sind auch riemengetriebene Rollenbahnkurven bekannt, die sich durch besondere Laufruhe und hohe Geschwindigkeit auszeichnen und speziell für Kommissionieranlagen konzipiert wurden. Als Riemen werden darin bekanntermaßen Rundriemen und Keilriemen eingesetzt.

Eine Rollenbahnkurve der eingangs beschriebenen Art ist aus der DE-A-42 09 756 bekannt. Das Dokument beschreibt eine Rollenbahnkurve mit in Förderrichtung aufeinanderfolgend angeordneten Tragrollen, die von einem über eine motorisch angetriebene Umlenkscheibe geführten Endlosriemen, der mittels jeweils zwischen zwei benachbarten Tragrollen und unter der von den Tragrollenachsen aufgespannten Ebene gelagerten Stützrollen an die Tragrollen angedrückt und dadurch mit letzteren in Wirkverbindung gehalten wird, einzeln angetrieben werden. Dabei ist vorgesehen, dass als Endlosriemen zum Antrieb der Tragrollen ein Flachriemen dient, der auf einer Bogenbahn geführt ist und mit seiner einen Flachseite an den Tragrollen angreift, und dass die Achsen der Stützrollen gegenüber den Drehachsen der Tragrollen so geneigt sind, dass die Innenkante des Flachriemens stärker als dessen Aussenkante in die Freiräume zwischen benachbarten Tragrollen hineingedrückt und dadurch beim Umlauf des Flachriemens zu einer wellenförmigen. Bewegung gezwungen wird. Dadurch soll erreicht werden, dass ein geringerer Riemenverschleiss als bei mit Rundschnur- oder Keilriemenantrieb ausgerüsteten Rollenbahnkurven eintritt.

Die Schrägstellung der Andruckrollen bewirkt, dass trotz des bogenförmigen Verlaufs der Rollenbahnkurve, in der die inneren Enden der Rollen näher beieinander liegen als die äußeren Enden, also die inneren Enden eine kleinere Teilung aufweisen, die Außenkante des Flachgurt-Riemens weder gedehnt, noch seine Innenkante gestaucht wird. Die Rollen brauchen dabei nicht konisch ausgebildet oder mit konischen Aufschieblingen ausgerüstet zu sein. Hierbei besteht - was in der DE-A-42 09 756 jedoch nicht erwähnt wird - ein Vorteil auch darin, dass es bei der Inbetriebnahme bzw. auch während des Förderns auf der Rollenbahn sogar zu einer Selbstzentrierung des gurtartigen Antriebselementes zwischen den Rollen kommt, so dass dieses durch eine Verschiebung - im Wesentlichen parallel zu den Längsachsen der Rollen - die für eine effiziente Förderung jeweils günstigste Lage zwischen den Förderrollenenden einnimmt;

Im Übrigen ist gemäß der DE-A-42 09 756 der Riemen, welcher speziell als Zahnriemen ausgebildet ist, über jeweils am Ende der Bahnkurve angeordnete Umlenkrollen umgelenkt und dann über einem Antriebsmotor benachbart angeordnete Führungsrollen und eine auf der Welle eines Antriebsmotors drehfest aufgenommene Antriebsscheibe geführt. Diese Riemenführung unterscheidet sich von der Riemenführung bei Rundschnuroder Keilriemenantrieben dadurch, dass der Flachriemen zwischen den Umlenkrollen jeweils am Ende der Bahnkurve und den Führungsrollen in der Nähe der Antriebsscheibe des Antriebsmotors aus seiner ursprünglichen Flachlage im Bereich der Bogenbahn mit seiner Flachseite in eine Vertikallage umgelenkt ist. Diesem Umstand wird gemäß der DE-A-42 09 756 jedoch keine Bedeutung beigemessen. Während der Zahnriemen im Obertrum der Bogenbahn der Rollenbahnkurve folgt, verläuft er im Untertrum etwa rechtwinklig auf die Enden der Rollenbahnkurve zu. Die Stützrollen sind mit Neigung ihrer Rotationsachsen in speziellen Tragkonsolen gelagert, die wiederum seitlich an der Innenwange der Rollenbahnkurve befestigt sind. Dort sind auch die Tragrollen gelagert.

Eine ähnliche Rollenbahn wie die DE-A-42 09 756 beschreibt auch die US-A-1 975 927. Es ist dort aber keine Umlenkung des Riemens in eine Vertikallage vorgesehen. Der Flachgurt-Riemen verläuft in seinem Untertrum mit horizontaler Ausrichtung seiner Breitseite. Während das Obertrum des Flachgurt-Riemens der kurvenförmigen Rollenbahn-Verlaufsrichtung folgt, verläuft das Untertrum sekantenartig zwischen den Enden der Kurve.

Der vorliegenden Erfindung liegt die Aufgabe zu Grunde, eine Rollenbahnkurve der gattungsgemäßen Art und eine Rollenbahn mit einer solchen Rollenbahnkurve zu schaffen, die bei hoher Funktionssicherheit, Laufruhe, hoher Fördergeschwindigkeit und der Möglichkeit einer einfachen Spannbarkeit des Gurtes baulich günstiger und in einfacher und flexibler Weise an bekannte Rollenbahnen anpassbar ist.

Erfindungsgemäß wird dies bei der beschriebenen Rollenbahnkurve dadurch erreicht, dass die frei drehbaren Führungsrollen auf einer Tragschiene angeordnet sind und dass der Flachgurt-Riemen im Untertrum, welches unterhalb der Tragschiene verläuft, durch die Führungsrollen derart geführt ist, dass der Flachgurt-Riemen der kurvenförmigen Rollenbahn-Verlaufsrichtung folgt.

Der aus dem Stand der Technik bekannte Einsatz des Flachgurt-Riemens als umlaufendes Antriebselement sichert dabei eine hohe Kompatibilität mit der oben erwähnten Rollenbahn, die vorteilhafterweise so weit gehen kann, dass der Antrieb von vor und hinter der erfindungsgemäßen Rollenbahnkurve angeordneten geraden Rollenbahnstücken als Übertrieb über ein- und denselben Flachgurt-Riemen erfolgen kann, wobei auf diese Weise eine erfindungsgemäße Förderbahn gebildet ist. Dem Flachgurt-Riemen muss dabei nicht durch eine bestimmte Materialauswahl eine erhöhte Elastizität verliehen werden. Die Montage eines einzigen Flachgurtes - bei insbesondere bis zu etwa 12 m Antriebslänge - ist dabei gegenüber der Montage von mehreren Ketten in Kettenkreisen von Tragrolle zu Tragrolle mit einer bedeutenden Zeitersparnis verbunden.

Die erfindungsgemäße technische Lösung verbindet die bekannte vorteilhafte technische Möglichkeit, alle Förderrollen der Rollenbahn mit nur einem Antriebselement antreiben zu können, wobei die bekannten flachen und abriebfesten, bandartig - d. h. mit parallel verlaufenden geraden Kanten bzw. Fasen des Riemens - ausgebildete Kunststoffgurte Verwendung finden können, mit der weiteren vorteilhaften Möglichkeit, die Baugröße und form der Rollenbahnkurve kompakter ausführen zu können, Hiermit verbunden ist auch eine höhere Arbeitssicherheit und dabei darüber hinaus auch die ebenfalls vorteilhafte Möglichkeit, den Flachgurt-Riemen unterseitig durch die unterhalb an der Führungsschiene drehbar auf Rollenachsen gelagerten Führungsrollen auf einfache Weise zu spannen. Diese Führungsrollen können dabei zusammen mit einem flachen Lagerteil eine gemeinsame einfach an der Führungsschiene zu montierende Baueinheit bilden.

Eine Nachrüstung von nicht angetriebenen Rollenbahnkurven mit einem erfindungsgemäßen Antrieb ist in jedem Fall problemlos möglich.

Weitere vorteilhafte Ausgestaltungsmerkmale der Erfindung sind in den Unteransprüchen sowie der folgenden Beschreibung entfalten.

Anhand zweier in der Zeichnung dargestellter, bevorzugter Ausführungsbeispiele soll im folgenden die Erfindung näher erläutert werden. Dabei zeigen:

Fig. 1      eine perspektivische Ansicht einer erfindungsgemäßen angetriebenen Rollenbahnkurve,

Fig. 2      eine radiale Schnittdarstellung durch eine erfindungsgemäße Rollenbahnkurve,

Fig. 3a und 3b      vergrößerte Schnittdarstellungen von jeweils zwei Förderrollen und einer dazwischen liegenden Andruckrolle an der Innen- und an der Außenfase des Antriebselementes,

Fig. 4      in einer perspektivischen Ansicht ähnlich wie in Fig. 1, einen erfindungsgemäßen Antriebsstrang der erfindungsgemäßen Rollenbahnkurve,

Fig. 5      ebenfalls in einer perspektivischen Ansicht, die Darstellung einer Antriebseinheit des Antriebsstrangs der erfindungsgemäßen Rollenbahnkurve,

Fig. 6      in einer perspektivischen Ansicht wie in Fig. 5, jedoch in größerem Maßstab, die Darstellung eines Querstützrades des Antriebsstranges der erfindungsgemäßen Rollenbahnkurve,

Fig. 7      eine Seitenansicht einer erfindungsgemäßen angetriebenen Rollenbahnkurve, in einer ersten Ausführung, ausgelegt für den Eigenantrieb,

Fig. 8      in einer Darstellung ähnlich wie in Fig. 7, jedoch nur im oberen Bereich der Vorrichtung, eine Seitenansicht einer erfindungsgemäßen angetriebenen Rollenbahnkurve, in einer zweiten Ausführung, ausgelegt für beidseitigen Übertrieb,

Fig. 9      in einer Ansicht wie in Fig. 7, jedoch vergrößert, ein Kopfbereich einer erfindungsgemäßen angetriebenen Rollenbahnkurve in der ersten Ausführung mit Eigenantrieb,

Fig. 10      in perspektivischer Ansicht, ein Kopfteil für die konstruktive Ausbildung des Kopfbereiches einer erfindungsgemäßen angetriebenen Rollenbahnkurve mit Eigenantrieb,

Fig. 11      in einer Ansicht wie in Fig. 8, jedoch vergrößert, ein Kopfbereich einer erfindungsgemäßen angetriebenen Rollenbahnkurve in der zweiten Ausführung mit Übertrieb,

Fig. 12      in perspektivischer Ansicht, ein Kopfteil für die konstruktive Ausbildung des Kopfbereiches einer erfindungsgemäßen angetriebenen Rollenbahnkurve mit Übertrieb.

In den verschiedenen Figuren der Zeichnung sind dieselben Teile stets auch mit denselben Bezugszeichen versehen, so dass sie in der Regel auch jeweils nur einmal beschrieben werden.

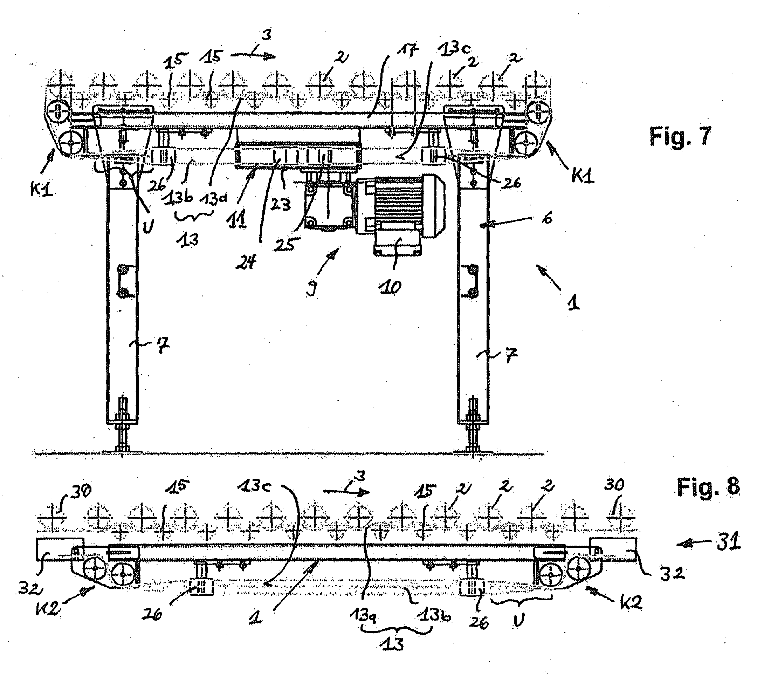

Wie sich zunächst aus den Zeichnungsfiguren 1, 2 und 7, in denen eine erste, sowie aus Fig. 8 ergibt, in denen eine zweite exemplarische Ausführung einer erfindungsgemäßen angetriebenen Rollenbahnkurve als Ganzes gezeigt sind, weist eine erfindungsgemäße Rollenbahnkurve 1 eine Vielzahl von Förderrollen 2 auf, die um horizontale, sich quer zur kurvenförmigen Rollenbahn-Verlaufsrichtung bzw. zur Rollenbahn-Förderrichtung 3 erstreckende Achsen 4 drehbar gelagert sind. Hierbei sind die, insbesondere zylindrisch ausgebildeten, Förderrollen 2 in Seitenwangen 5 eines Rollenbahngestells 6 endseitig drehbar, jedoch vertikal nicht verschieblich, gelagert. Die Achsen 4 treffen sich in einem Krümmungsmittelpunkt M der erfindungsgemäßen Rollenbahnkurve 1. Durch die Lage des Krümmungsmittelpunktes M ist eine Außenseite O und eine Innenseite I der erfindungsgemäßen Rollenbahnkurve 1 festgelegt. Das Rollenbahngestell 6 weist dabei vier senkrechte Standbeine 7 auf, die bedarfsweise auf eine ausgewählte Höhe einstellbar sind.

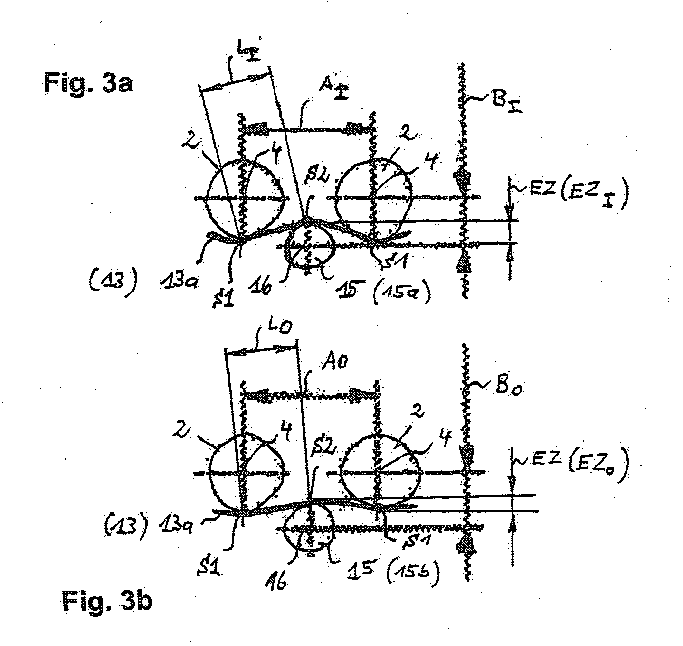

Unterhalb der Förderrollen 2 ist ein Antrieb 9 angeordnet. Dieser Antrieb 9 umfasst einen Elektromotor 10, der mit einem Riemenantrieb 11 (Fig. 7) verbunden ist. Das Antriebselement des Antriebs 9, welches unmittelbar die Förderrollen 2 antreibt, ist ein Flachgurt-Riemen 13, der in der Rollenbahn-Verlaufsrichtung 3 derart umlaufend an geordnet ist, dass sein Obertrum 13a die Unterseiten der Förderrollen 2 berührt, wie dies insbesondere Fig. 3a, 3b, 7 bis 9 und 11 zu entnehmen ist.

Dabei erstreckt sich das Obertrum 13a im Wesentlichen tangential zu den Förderrollen 2 und ist jeweils zwischen zwei nebeneinander liegenden Förderrollen 2, die miteinander Paare bilden, über frei drehbare Andruckrollen 15 laufend, deren Oberseiten jeweils der Flachgurt-Riemen 13 berührt, um ein Einziehungsmaß eingezogen geführt. Das Einziehungsmaß ist in Fig. 3a und 3b mit dem Bezugszeichen EZ bezeichnet und dient zunächst dazu, den Umschlingungswinkel des Obertrums 13a an den Förderrollen 2 zu vergrößern. Dadurch kann eine größere Antriebskraft übertragen werden. Die Andruckrollen 15 sind dabei im Sinne einer gleichmäßigen Kraftverteilung bevorzugt mittig zwischen den Förderrollen 2 angeordnet.

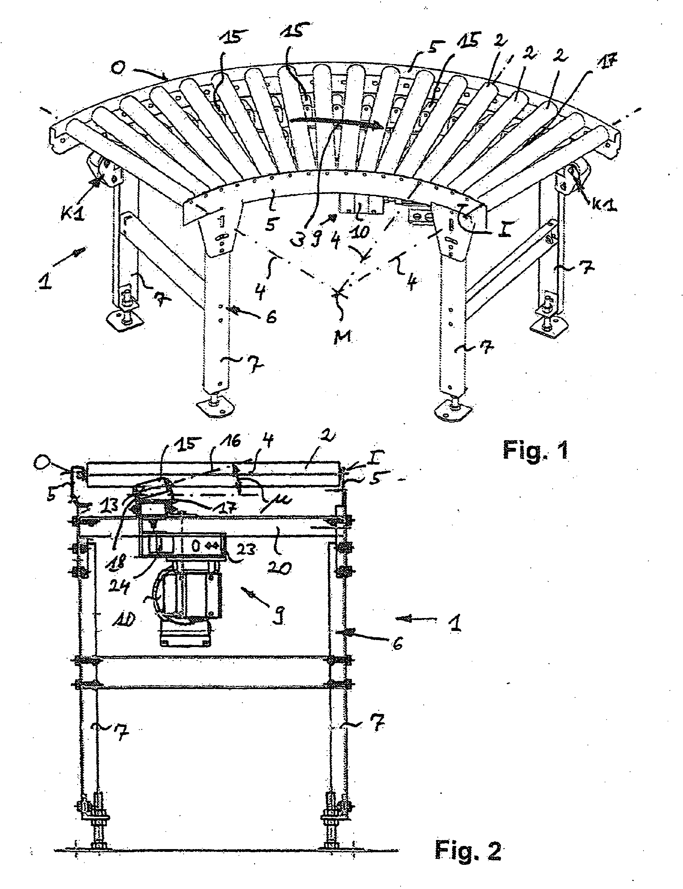

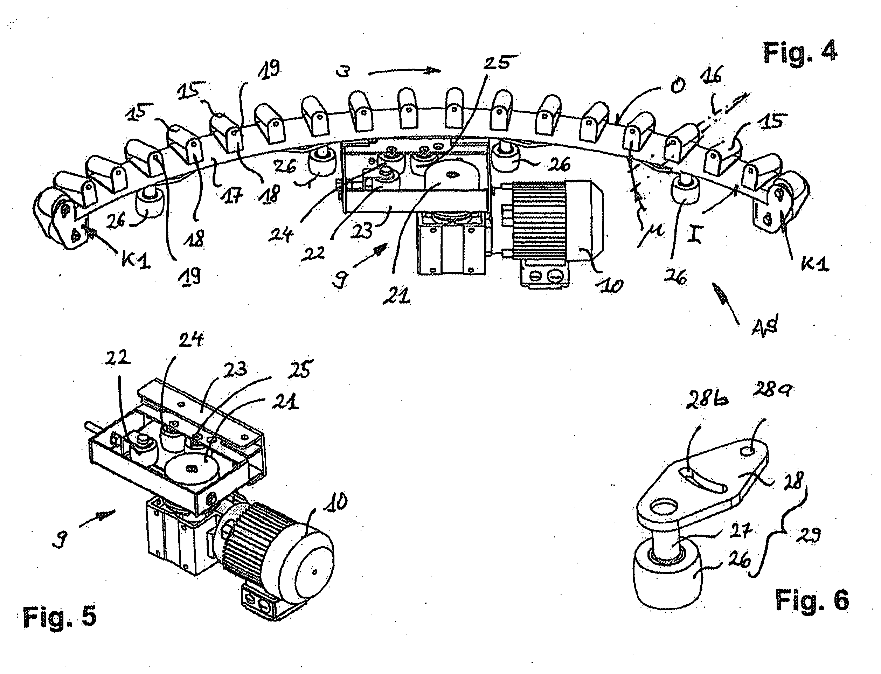

Erfindungsgemäß weisen die Andruckrollen 15 - wie dies Fig. 2 und Fig. 4 in besonders deutlicher Weise zeigen - Längsachsen 16 auf, die derart geneigt sind, dass der Flachgurt-Riemen 13 in einem der Innenseite I zugewandten Bereich gespannt wird. Diese Neigung wird durch den Neigungswinkel μ gegenüber der Horizontalen beschrieben und führt dazu, dass die der Innenseite I zugewandt liegenden Enden (Bezugszeichen 15a in Fig. 3a) der Andruckrollen 15 jeweils höher liegen als die der Außenseite O zugewandt liegenden Enden (Bezugszeichen 15b in Fig. 3b) der Andruckrollen 15.

Hierbei ist der Abstand $A_I$ (Fig. 3a) zwischen zwei benachbarten Förderrollen 2 in dem der Innenseite I zugewandten Bereich kleiner als der Abstand $A_O$ (Fig. 3b) in dem der Außenseite O zugewandten Bereich. Ohne die Neigung der Andruckrollen 15 würde dies zu einer innenseitigen Stauchung und zu einer außenseitigen Dehnung des Flachgurt-Riemens 13 führen, die aber erfindungsgemäß dadurch vermieden wird, dass das Einzugsmaß $EZ_I$ in dem der Innenseite I zugewandten Bereich größer ist als das Einzugsmaß $EZ_O$ in dem der Außenseite O zugewandten Bereich.

Eine charakteristische Riemenlänge RL zwischen benachbarten Förderrollen 2, die sich - bei der bevorzugten mittigen Lage der Andruckrollen 15 zwischen den Förderrollen 2 - jeweils als doppelter Wert der in Fig. 3a bzw. 3b mit den Bezugszeichen $L_I$ bzw. $L_O$ bezeichneten Riemenabschnittslängen zwischen dem Schnittpunkt S1 des Flachgurt-Riemens 13 mit der senkrechten Achsebene der Förderrolle 2 und dem Schnittpunkt S2 des Flachgurt-Riemens 13 mit der senkrechten Achsebene der Andruckrolle 15 ergibt, bleibt somit über die gesamte Länge der Andruckrolle 15 konstant. Hierbei gilt für die Riemenabschnittslängen $L_I$ und $L_O$, die Abstände $A_I$ und $A_O$ zwischen den benachbarten Förderrollen 2 und die Einzugsmaße $EZ_I$, $EZ_O$ über die gesamte Länge der Andruckrolle 15, also insbesondere sowohl in dem der Innenseite I zugewandten Bereich, als auch in dem der Außenseite O zugewandten Bereich der Andruckrollen 15 näherungsweise der Satz des Pythagoras in der Form

$$L_I{}^2 = (A_I/2)^2 + EZ_I{}^2$$

und

$$L_O{}^2 = (A_O/2)^2 + EZ_O{}^2.$$

Außerdem kann durch die Beziehung

$$\mu = \arctan (EZ_I - EZ_O)$$

die Neigung der Andruckrollen 15 bestimmt werden. Der Winkel $\mu$ kann dabei insbesondere Werte im Bereich von etwa 5° bis 30°, bevorzugt im Bereich von etwa 12° bis 18°, annehmen.

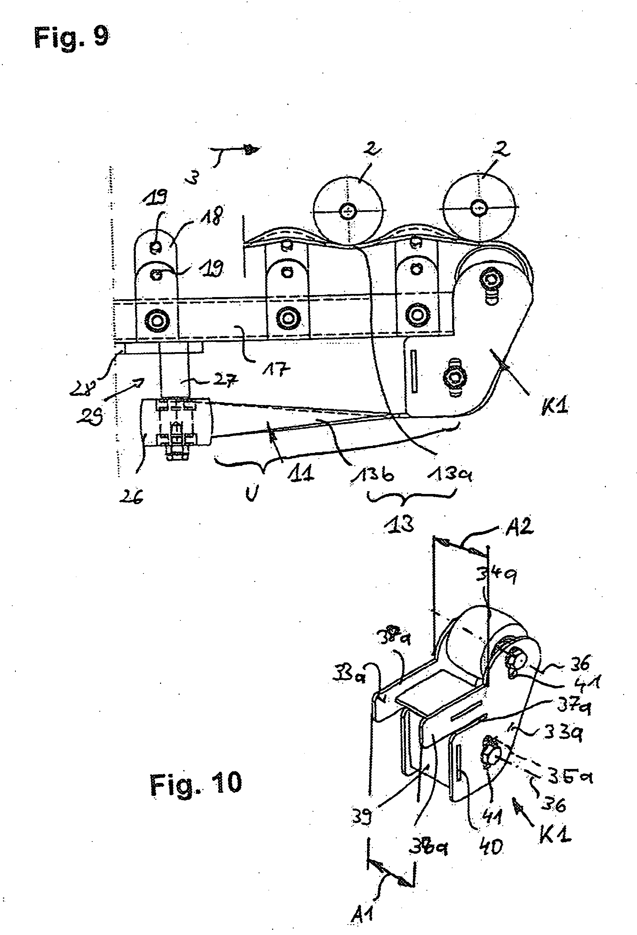

Vor der ersten und hinter der letzten Förderrolle 2 wird in der ersten Ausführung gemäß Fig. 1, 3, 7 und 9 der Flachgurt-Riemen 13 mittels eines Kopfteils K1, das in Fig. 10 als Einzelteil dargestellt ist, im Sinne des Eigenantriebs der Vorrichtung so umgelenkt, dass auch die erste und die letzte Förderrolle 2 jeweils berührt werden.

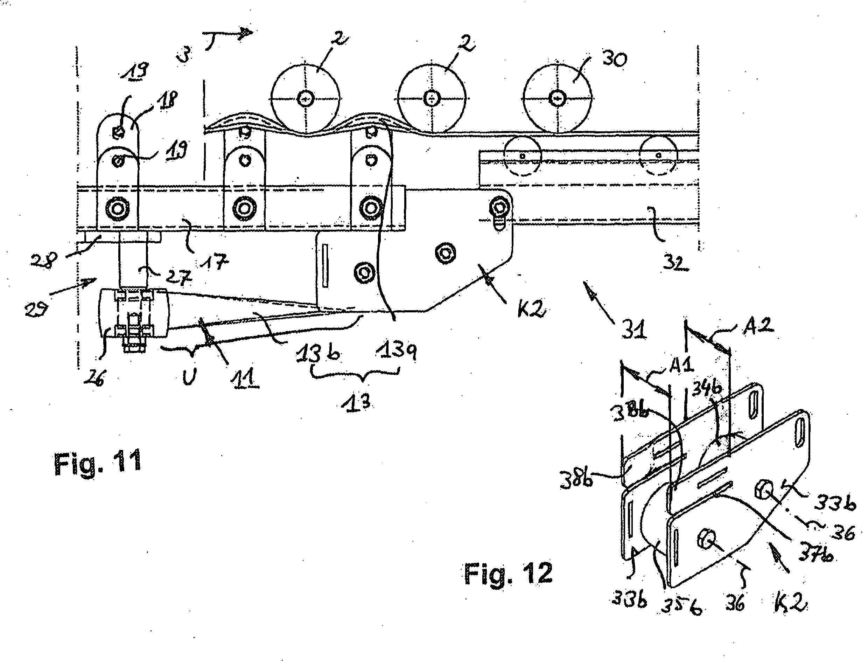

In der alternativ dargestellten Ausführung gemäß Fig. 8 wird vor der ersten und hinter der letzten Förderrolle 2 wird der Flachgurt-Riemen 13 mittels eines Kopfteils K2, das in Fig. 12 als Einzelteil dargestellt ist, im Sinne eines Übertriebs so weitergeführt, dass ebenfalls auch die erste und die letzte Förderrolle 2 jeweils berührt werden.

Die Kopfteile K1, K2 sind innerhalb des Rollbahngestells 6 herausnehmbar gelagert, was nachfolgend insbesondere unter Bezugnahme auf Fig. 9 bis 12 noch genauer beschrieben wird.

Die Andruckrollen 15 und die Kopfteile K1, K2 sind dabei an einer sich in Rollenbahnrichtung 3 horizontal erstreckenden gekrümmten Tragschiene 17 gelagert, die mit dem Antrieb 9 verbunden, insbesondere an ihrer Unterseite verschraubt, ist, so dass die Tragschiene 17 und der Antrieb 9 die in Fig. 4 in perspektivischer Ansicht gezeigte Montageeinheit als Antriebsstrang AS der erfindungsgemäßen Rollenbahnkurve 1 bilden. Dadurch können auch nicht angetriebene Rollenbahnen nachträglich mit diesem Antriebsstrang ausgerüstet werden.

Das Obertrum 13a des Flachgurt-Riemens 13 als Antriebselement verläuft oberhalb der Tragschiene 17, wobei das Antriebselement so geführt ist, dass sein Untertrum 13b unterhalb der Tragschiene 17 verläuft. Das Antriebselement kann dabei mit Vorteil als Geweberiemen ausgebildet sein, so dass es praktisch keiner Längung unterliegt. Vorzugsweise ist es einseitig gummiert, so dass ein Schlupf im Antrieb 9 vermieden wird. Ist die Rollenbahn nicht als Staubahn vorgesehen, was in der Regel für eine Rollenbahnkurve gegeben ist, so ist auch eine beidseitige Gummierung des Flachgurt-Riemens 13 vorteilhaft.

Die Tragschiene 17 ist, wie der Querschnittsdarstellung in Fig. 2 zu entnehmen ist, als allseitig geschlossenes Rechteck-Profil ausgebildet, wodurch eine hohe Torsionssteifigkeit erreicht wird Die Andruckrollen 15 sind in im Wesentlichen U-förmigen, Lagerböcken 18, jedoch mit schräg ausgeführten U-Schenkeln frei drehbar gelagert, wie dies beispielsweise aus Fig. 2, 4, 9 und 11 hervorgeht. Hierzu sind in den freien Enden der U-Schenkel, die schräg zur Förderebene verlaufen, Bohrungen 19 (siehe insbesondere Fig. 9 und 11) ausgebildet, in denen die Andruckrollen 15 endseitig mit ihrer Drehachse 16 unter dem Winkel $\mu$ gelagert sind.

Die Drehachse 16 der Andruckrollen 15 kann einstückig mit den Andruckrollen 15 sein, sie kann aber auch als separates, insbesondere aus Metall bestehendes Teil kraftschlüssig mit der jeweiligen Andruckrolle 15 verbunden sein. Die Andruckrollen 15 können vorteilhafterweise als Spritzgußteile aus Kunststoff gefertigt sein, wobei bevor zugt eine im Wesentlichen zylindrische Grundform, aber gegebenenfalls auch eine leicht ballig verlaufende Oberfläche vorgesehen sein kann.

Bei der Montage auf der Tragschiene 17 kann der Abstand der hintereinander gelagerten Andruckrollen 15 variiert werden und läßt somit eine Anpassung an den Abstand der Förderrollen 2 zu.

Die Tragschiene 17 selbst wird an Querträgern (Bezugszeichen 20 in Fig. 2) des Rollenbahngestells 6 befestigt, insbesondere mit den Querträgern 20 verschraubt. Durch eine höhenverstellbare Befestigung der Querträger 20, und damit eine höhenverstellbare Lagerung der Tragschiene 17 im Rollenbahngestell 6 kann dabei die umlaufende Bewegung des Flachgurt-Riemens 13 gesteuert werden. Zur Höheneinstellung können dabei mit Vorteil in das Rollenbahngestell 6 eingesetzte Augenschrauben vorgesehen sein. Wenn die Tragschiene 17 in ihrer Höhe angehoben wird, wandert der Flachgurt-Riemen 13 näher an die Außenseite O der erfindungsgemäßen Rollenbahnkurve 1, während er sich bei einer Verringerung der Höhe näher an die Innenseite I der Rollenbahnkurve 1 bewegt. Diese oben unter dem Stichwort "Selbstzentrierung" des Antriebselementes 13 zwischen den Förderrollen 2 bereits erwähnte Radialverschiebung - parallel zu den Längsachsen 4 der Förderrollen 2 - bewirkt die Einnahme einer für eine effiziente Förderung jeweils optimalen Relativlage des Flachgurt-Riemen 13 in Bezug auf die Förderrollenenden. Es erfolgt somit auch eine Anpassung der Umschlingungswinkel bzw. der Einzugsmaße $EZ_I$, $EZ_O$ des Flachgurt-Riemens 13 an die jeweiligen Durchmesser der Förderrollen 2.

Der in Fig. 5 separat dargestellte Antrieb 9 besteht aus dem Elektromotor 10, der eine Antriebsrolle 21 antreibt, und einer der Antriebsrolle 21 horizontal gegenüberliegenden Spannrolle 22 sowie zwei in einem Gehäuse 23 anderseitig zwischen Antriebsrolle 21 und Spannrolle 22 angeordneten, einander horizontal gegenüberliegenden Umlenkrollen 24, 25. Das Antriebselement, also der Flachgurt-Riemen 13, verläuft mit seinem Untertrum 13b über die Umlenkrollen 24, 25, die Antriebsrolle 21 und die Spannrolle 22. Die Spannrolle 22 ist derart gelagert, dass ihr Abstand von der Antriebsrolle 21 veränderbar ist. Der Durchmesser der Antriebsrolle 21 ist zweckmäßigerweise größer als der der Spannrolle 22.

Um im Untertrum 13b des Riemenantriebs 11 dem bogenförmigen Verlauf der erfindungsgemäßen Rollenbahnkurve 1 gerecht zu werden ist vorgesehen, dass die Breitseite 13c des Flachgurt-Riemens 13 im Untertrum 13b im Wesentlichen senkrecht ausgerichtet ist, wie dies insbesondere Fig. 7 und 8 veranschaulichen. Dazu ist in - in den genannten Figuren mit dem Bezugszeichen U bezeichneten - Umlenkbereichen eine entsprechende Drehung des Flachgurt-Riemens 13 vorgesehen.

Der Flachgurt-Riemen 13 läuft dabei im Untertrum 13b über Führungsrollen 26, die vorzugsweise leicht ballig ausgebildet sind und auch die Funktion eines Spannens des Flachgurt-Riemens 13 erfüllen. Die Führungsrollen 26 sind dabei drehbar auf Rollenachsen 27 gelagert, die wiederum in einem flachen Lagerteil 28 gehalten sind. Lagerteil 28, Rollenachsen 27 und Führungsrollen 26 können dabei jeweils mit Vorteil eine gemeinsame Baueinheit bilden, die als Querstützrad 29 bezeichnet werden kann und in Fig. 6 als Einzelteil dargestellt ist. Das Querstützrad 29 wird unterseitig an der Tragschiene 17 befestigt, insbesondere mit der Tragschiene 17 verschraubt, wie dies Fig. 4, 7 bis 9 und 11 zeigen. Dabei kann, um eine Veränderung der Spannung des Flachgurt-Riemens 13 zu ermöglichen, die Befestigung einerseits durch eine Bohrung 30 und andererseits durch ein Langloch 31 vorgenommen werden, wodurch bei der Montage eine horizontale Verschwenkbarkeit und damit Justierbarkeit des Querstützrades 29 gegenüber der Tragschiene 17 im Sinne einer optimalen Riemenspannung vorliegt. Durch eine radiale Auswärtsbewegung der Führungsrollen 26 auf die Außenseite O zu wird dabei der Flachgurt-Riemen 13 gespannt.

Es wurde bereits ausgeführt, dass die erfindungsgemäße angetriebene Rollenbahnkurve 1 mit Vorteil in ihrer ersten, insbesondere in Fig. 7 und 9 dargestellten Form als in sich geschlossene Vorrichtung mit Eigenantrieb und in ihrer zweiten, insbesondere in Fig. 8 und 11 dargestellten Form als in einer Förderbahn anschlussmäßig offene Vorrichtung mit Übertrieb ausgeführt werden kann.

In der ersten Ausführungsform ist die erfindungsgemäße angetriebene Rollenbahnkurve 1 mit flexibel weiteren angetriebenen oder nicht angetriebenen geraden oder kurvenförmig ausgebildeten Rollenbahnelementen kombinierbar.

In der zweiten Ausführungsform bildet die erfindungsgemäße Rollenbahnkurve eine erfindungsgemäße Rollenbahn, wobei der Flachgurt-Riemen 13 als umlaufendes Antriebselement weitere Förderrollen 30 in ein- oder beidseitig angeschlossenen geraden oder kurvenförmig ausgebildeten Rollenbahnelementen antreibt. Für die erfindungsgemäße Rollenbahn steht dabei in Fig. 8 und 11 das Bezugszeichen 31 und für die an jeder Seite angeschlossenen gerade oder kurvenförmig ausgebildeten Rollenbahnelemente jeweils das Bezugszeichen 32.

Es wurde des Weiteren auch schon ausgeführt, dass die in Fig. 9 und 11 dargestellten Kopfbereiche die Charakteristika der beiden unterschiedlichen Ausführungsformen der erfindungsgemäßen angetriebenen Rollenbahnkurve 1 darstellen. Dabei unterscheiden sich bei ansonsten vorteilhaft identischer Ausführung nur die ebenfalls bereits erwähnten Kopfteile K1, K2 der beiden Ausführungen, die in Fig. 10 und Fig. 12 als Einzelteile dargestellt sind.

Beiden Ausführungen der Kopfteile K1, K2 ist gemeinsam, dass sie einen sehr einfachen Aufbau aufweisen. Beide Kopfteile K1, K2 weisen - insbesondere unter Einsatz des Laserschneidens gefertigte - vorzugsweise metallische Seitenwände 33a, 33b auf, zwischen denen jeweils zwei Kopfrollen, eine obere Kopfrolle 34a (erste Ausführung) bzw. 34b (zweite Ausführung) und eine untere Kopfrolle 35a (verdeckt in der ersten Ausführung) bzw. 35b (zweite Ausführung), drehbar gehalten sind. Alle Kopfrollenachsen 36 sind dabei im Montagezustand der Kopfteile K1, K2 bevorzugt horizontal ausgerichtet und mit den Seitenwänden 33a, 33b verschraubt.

Bei der ersten Ausführung dienen sowohl die obere Kopfrolle 34a, als auch die untere Kopfrolle 35a als Umlenkrollen, d. h. der Flachgurt-Riemen 13 wird mittels dieser Rollen 34a, 34b aus dem Obertrum 13a in das Untertrum 13b umgelenkt, wobei sich an die untere Kopfrolle 35a der Umlenkbereich U anschließt, der sich dann bis zum nächsten Querstützrad 29 erstreckt.

Letzteres ist auch bei der zweiten Ausführung gegeben, jedoch dienen darin weder die obere Kopfrolle 34b, noch die untere Kopfrolle 35b als Umlenkrollen, mit denen der Flachgurt-Riemen 13 aus den Trümern 13a, 13b umgelenkt wird, sondern nur als Leit rollen im Untertrum 13b. Die Umlenkung erfolgt bei der zweiten Ausführung in dem angeschlossenen Rollenbahnelement 32.

Beide Kopfteile K1, K2 weisen außerdem in ihren Seitenwänden 33a, 33b - wiederum insbesondere unter Einsatz des Laserschneidens gefertigte - Schlitze 37a, 37b auf, durch die im oberen Teil der Seitenwände 33a, 33b Zungen 38a, 38b gebildet sind, die zum vorzugsweise formschlüssigen und befestigenden Eingriff in den RechteckQuerschnitt der Tragschiene 17 bestimmt sind. Die Befestigung kann dabei nur durch einfaches Einstecken oder wahlweise mit zusätzlicher Verschraubung realisiert werden. Hierbei ist in bevorzugter Ausführung für eine einfache Montage und einen sicheren Halt der Kopfteile K1, K2 in der Tragschiene 17 vorgesehen, dass jeweils die freien Enden der Zungen 38a, 38b jeweils einen kleineren Abstand A1 voneinander aufweisen als der jeweilige Abstand A2 zwischen ihren in die Seitenwände 33a, 33b eingebundenen Enden, wobei die Zungen 38a, 38b bevorzugt zwischen ihren in die Seitenwände 33a, 33b eingebundenen Enden und ihren freien Enden konvex, insbesondere kreisbogenförmig nach außen, gekrümmt sein können. Im Falle eines Kreisbogens kann dessen Radius insbesondere mindestens der gleiche sein wie der mittlere Krümmungsradius eines Kreisbogens um den Mittelpunkt M der erfindungsgemäßen Rollenbahnkurve.

Die Erfindung ist nicht auf die dargestellten Ausführungsbeispiele beschränkt, sondern umfasst auch alle im Sinne der Erfindung gleichwirkenden Ausführungen. So kann z. B. in einer erfindungsgemäßen Förderbahn auch nur ein einziges weiteres Rollenbahnelement 32 angeschlossen sein. Auch kann sich in einer erfindungsgemäßen Rollenbahn 31 der gesamte Antrieb 9 nicht in der erfindungsgemäßen Rollenbahnkurve, sondern in einem angeschlossenen Rollenbahnelement 32 befinden.

In den dargestellten Ausführungsformen sind alle Andruckrollen 15 mit gleichem Neigungswinkel $\mu$ konzentrisch auf einem Kreisbogen um den Krümmungsmittelpunkt M der erfindungsgemäßen Rollenbahnkurve 1 angeordnet. Es wäre jedoch auch möglich, dass der Neigungswinkel $\mu$ - beispielsweise kontinuierlich von Andruckrolle 15 zu Andruckrolle - variiert und dass der Bogen nicht konzentrisch um den Krümmungsmittelpunkt M und nicht als Kreisbogen, sondern beispielsweise elliptisch, ausgeführt wird.

Des Weiteren kann der Fachmann ergänzende vorteilhafte Maßnahmen vorsehen, ohne dass der Rahmen der Erfindung verlassen wird. So weist das Kopfteil K1 der ersten Ausführung zur Erhöhung seiner Stabilität auch eine die Seitenwände 33a verbindende Querwand 39 auf, die ebenfalls steckend in weiteren Schlitzen 40 der Seitenwände 33a befestigbar ist. Außerdem kann bei dieser Ausführung - wie in Fig. 10 dargestellt - bevorzugt eine Befestigung der Kopfrollenachsen 36 in Langlöchern 41 vorgesehen sein, die einer Verbesserung der Gurtausrichtung dient.

Die erfindungsgemäße Rollenbahnkurve und die erfindungsgemäße Rollenbahn sind für Transportgeschwindigkeiten von bis zu etwa 60 m/min und Transportleistungen von bis zu etwa 100 kg pro Meter Bahn geeignet.

Auch dem Antriebsstrang AS wird erfinderische Bedeutung beigemessen.

Bezugszeichen

| | |
|---|---|
| 1 | Rollenbahnkurve |
| 2 | Förderrolle |
| 3 | Förderrichtung, Verlaufsrichtung von 1 |
| 4 | Achse von 2 |
| 5 | Seitenwange von 6 |
| 6 | Rollenbahngestell |
| 7 | Standbein von 6 |
| 9 | Antrieb |
| 10 | Elektromotor von 9 |
| 11 | Riemenantrieb |
| 13 | Flachgurt-Riemen, Antriebselement für 2 |
| 13a | Obertrum von 13 |
| 13b | Untertrum von 13 |
| 13c | Breitseite von 13 |
| 15 | Andruckrolle |
| 15a | Ende von 15 in Richtung I |
| 15b | Ende von 15 in Richtung O |
| 16 | Achse von 15 |
| 17 | Tragschiene für 15 |
| 18 | Lagerbock für 15 auf 17 |
| 19 | Bohrung in 18 |
| 20 | Querträger von 6 |
| 21 | Antriebsrolle in 9 |
| 22 | Spannrolle in 9 |
| 23 | Gehäuse von 9 |
| 24, 25 | Umlenkrolle in 9 |
| 26 | Führungsrolle für 13 in 13b |
| 27 | Rollenachse von 26 |
| 28 | Lagerteil von 29 |
| 28a | Bohrung in 28 |

| | |
|---|---|
| 28b | Langloch in 28 |
| 29 | Querstützrad aus 26, 27, 28 |
| 30 | Förderrolle von 32 |
| 31 | Rollenbahn |
| 32 | Rollenbahnelement von 31 |
| 33a | Seitenwand von K1 |
| 33b | Seitenwand von K2 |
| 34a | obere Kopfrolle von K1, Umlenkrolle für 13 |
| 34b | obere Kopfrolle von K2, Leitrolle für 13 |
| 35a | untere Kopfrolle von K1, Umlenkrolle für 13 |
| 35b | untere Kopfrolle von K2, Leitrolle für 13 |
| 36 | Achse von 34a, 34b, 35a, 35b |
| 37a | Schlitz in 33a zur Bildung von 38a |
| 37b | Schlitz in 33b zur Bildung von 38b |
| 38a | Zunge von 33a |
| 38b | Zunge von 33b |
| 39 | Querwand von K1 |
| 40 | Schlitz in 33a für 39 |
| 41 | Langloch in 33a für 36 |
| | |
| A1 | Abstand der freien Enden von 38a, 38b |
| A2 | Abstand der Enden von 38a, 38b, eingebunden in 33a, 33b |
| $A_I$ | Abstand zwischen 2 und 2 bei 15a |
| $A_O$ | Abstand zwischen 2 und 2 bei 15b |
| AS | Antriebsstrang für 13 |
| EZ | Einziehungsmaß von 13 |
| $EZ_I$ | Einziehungsmaß von 13 bei 15a |
| $EZ_O$ | Einziehungsmaß von 13 bei 15b |
| I | Innenseite von 1 |
| K1 | Kopfteil für Eigenantrieb von 1 |
| K2 | Kopfteil für Übertrieb von 1 zu 32 |
| $L_I$ | Riemenabschnittslänge von 13 bei 15a |
| $L_O$ | Riemenabschnittslänge von 13 bei 15b |
| M | Krümmungsmittelpunkt von 1 |
| O | Außenseite von 1 |
| RL | Riemenlänge von 13 zwischen 2 und 2 |
| S1, S2 | Schnittpunkte von 13 mit Vertikalebenen |
| U | Umlenkbereich von 13 |
| | |
| $\mu$ | Neigungswinkel von 16 |

**Patentansprüche**

1. Angetriebene Rollenbahnkurve (1) mit einer Mehrzahl von Förderrollen (2), die hintereinander quer zur kurvenförmigen Rollenbahn-Verlaufsrichtung (3), d. h. mit ihren Längsachsen (4) von einer Außenseite (O) zu einer Innenseite (I) der Rollenbahnkurve (1) weisend, drehbar angeordnet sind und mittels eines umlaufenden Antriebselementes (13) antreibbar sind, wobei das umlaufende Antriebselement (13) ein Flachgurt-Riemen (13) ist, dessen Obertrum (13a) einerseits die Unterseiten der Förderrollen (2) und andererseits die Oberseiten von unterhalb und zwischen den Förderrollen (2) angeordneten, frei drehbaren Andruckrollen (15) berührt, wobei die Andruckrollen (15) Längsachsen (16) aufweisen, die derart geneigt sind, dass der Flachgurt-Riemen (13) in einem der Innenseite (I) zugewandten Bereich gespannt wird, wobei in einem Untertrum (13b) des Flachgurt-Riemens (13) der Flachgurt-Riemen (13) ma Hilfe von frei drehbaren Führungsrollen (26) derart umgelenkt und geführt ist, dass eine Breitseite (13c) des Flachgurt-Riemens (13) im Wesentlichen senkrecht ausgerichtet ist,
**dadurch gekennzeichnet, dass** die frei drehbaren Führungsrollen (26) auf einer Tragschiene (17) angeordnet sind und dass der Flachgurt-Riemen (13) im Untertrum (13b), welches unterhalb der Tragschiene (17) verläuft, durch die Führungsrollen (26) derart geführt ist, dass der Fiachgurt-Riemen (13) der kurvenförmigen Rollenbahn-Verlaufsrichtung (3) folgt,

2. Rollenbahnkurve (1) nach Anspruch 1,
**dadurch gekennzeichnet, dass** die Neigung der Längsachsen (16) der Andruckrollen (15) durch einen Neigungswinkel ($\mu$) gegenüber der Horizontalen beschrieben wird und wobei der Innenseite (I) zugewandt liegende Enden (15a) jeweils höher liegen als der Außenseite (O) zugewandt liegende Enden (15b) der Andruckrollen (15).

3. Rollenbahnkurve (1) nach Anspruch 1 oder 2,
**dadurch gekennzeichnet, dass** das Obertrum (13a) des Flachgurt-Riemens (13) im Wesentlichen tangential zu den Förderrollen (2) verläuft rund jeweils zwischen zwei nebeneinander liegenden Förderrollen (2) über die Andruckrollen (15) laufend um ein Einziehungsmaß ($EZ$, $EZ_1$, $EZ_2$) eingezogen geführt ist.

4. Rollenbahnkurve (1) nach Anspruch 3,
**dadurch gekennzeichnet, dass** das Einzugsmaß ($EZ_1$) in einem der Innenseite (I) zugewandten Bereich des Flachgurt-Riemens (13) größer ist als das Einzugsmaß ($EZ_O$) in einem der Außenseite (O) zugewandten Bereich.

5. Rollenbahnkurve (1) nach einem der Ansprüche 1 bis 3,
**dadurch gekennzeichnet, dass** sich eine charakteristische Riemenlänge (RL) zwischen benachbarten Förderrollen (2) bei mittiger Lage der Andruckrollen (15) zwischen den Förderrollen (2) jeweils als doppelter Wert von Riemenabschnittslängen ($L_1$, $L_o$) zwischen einem Schnittpunkt (S1) des Flachgurt-Riemens (13) mit einer senkrechten Achsebene einer Förderrolle (2) und einem Schnittpunkt (S2) des Flachgurt-Riemens (13) mit einer senkrechten Achsebene einer benachbarten Andruckrolle (15) ergibt.

6. Rollenbahnkurve (1) nach Anspruch 4 und 5,
**dadurch gekennzeichnet, dass** für den Verlauf des Flachgurt-Riemens (13) zwischen einer Förderrolle (2) und einer benachbarten Andruckrolle (15) näherungsweise gilt

$$L_I^2 = (A_I/2)^2 + EZ_I^2$$

und

$$L_O^2 = (A_O/2)^2 + EZ_O^2,$$

wobei $A_I$ der Abstand zwischen zwei benachbarten Förderrollen (2) in dem der Innenseite (I) zugewandten Bereich und $A_O$ der Abstand in dem der Außenseite (O) zugewandten Bereich des Flachgurt-Riemens (13) ist.

7. Rollenbahnkurve (1) nach Anspruch 2 und einem der Ansprüche 4 bis 6,
   **dadurch gekennzeichnet, dass** sich der Neigungswinkel ($\mu$) aus der Beziehung

$$\mu = arctan (EZ_I - EZ_O)$$

   ergibt.

8. Rollenbahnkurve (1) nach einem der Ansprüche 2 bis 7,
   **dadurch gekennzeichnet, dass** der Neigungswinkel ($\mu$) Werte im Bereich von etwa 5° bis 30°, bevorzugt im Bereich von etwa 12° bis 18°, annimmt.

9. Rollenbahnkurve (1) nach einem der Ansprüche 1 bis 8,
   **dadurch gekennzeichnet, dass** die, insbesondere zylindrisch ausgebildeten. Förderrollen (2) in Seitenwangen (5) eines Rollenbahngestells (6) endseitig drehbar, jedoch vertikal nicht verschieblich, gelagert sind.

10. Rollenbahnkurve (1) nach einem der Ansprüche 1 bis 9.
    **dadurch gekennzeichnet, dass** das umlaufende Antriebselement (13) als Geweberiemen mit parallel verlaufenden geraden Kanten ausgebildet und vorzugsweise mit einer ein- oder beidseitigen Gummierung versehen ist.

11. Rollenbahnkurve (1) nach einem der Ansprüche 1 bis 10,
    **dadurch gekennzeichnet, dass** alle Andruckrollen (15), insbesondere mit gleichem Neigungswinkel

($\mu$), konzentrisch auf einem Kreisbogen um einen Krümmungsmittelpunkt (M) der Rollenbahnkurve (1) angeordnet sind.

12. Rollenbahnkurve (1) nach einem der Ansprüche 1 bis 11,
    **dadurch gekennzeichnet, dass** die Andruckrollen (15) frei drehbar -bevorzugt in im Wesentlichen U-förmigen Lagerböcken (18) mit schräg ausgeführten U-Schenkeln - auf der Tragschiene (17) gelagert sind.

13. Rollenbahnkurve (1) nach Anspruch 1 bis 12,
    **dadurch gekennzeichnet, dass** die Tragschiene ; (17) als Rechteck-Profil ausgebildet ist.

14. Rollenbahnkurve (1) nach einem der Ansprüche 1 bis 13,
    **dadurch gekennzeichnet, dass** die Tragschiene (17), insbesondere an Querträgern (20) eines Rollenbahngestells (6), höhenverstellbar befestigt ist.

15. Rollenbahnkurve (1) nach einem der Ansprüche 1 bis 14,
    **dadurch gekennzeichnet, dass** die Tragschiene (17) endseitig durch in die Tragschiene (17) einsteckbare Kopfteile (K1, K2) abgeschlossen ist, wobei die Kopfteile (K1, K2) wahlweise für einen Eigenantrieb mit dem Flachgurt-Riemen (13) oder für einen Übertrieb des Flachgurt-Riemens (13) ausgelegt sind.

16. Rollenbahnkurve (1) nach einem der Ansprüche 1 bis 15,
    **dadurch gekennzeichnet, dass** der Flachgurt-Riemen (13) im Untertrum (13b) mittels der unter der Tragschiene (17) angeordneten Führungsrollen (26), welche vorzugsweise leicht-ballig ausgebildet sind, spannbar ist

17. Rollenbahnkurve (1) nach einem der Ansprüche 1 bis 16,
    **dadurch gekennzeichnet, dass** eine im Untertrum (13b) angeordnete Führungsrolle (26) und ihre Rollenachse (27) zusammen mit einem Lagerteil (28) jeweils ein Querstützrad (29) als gemeinsame Baueinheit bilden, die insbesondere mit horizontaler Verschwenkbarkeit unterseitig an der Tragschiene (17) befestigbar ist.

18. Rollenbahnkurve (1) nach einem der Ansprüche 15 bis 17,
    **dadurch gekennzeichnet, dass** die Kopfteile (K1, K2), insbesondere unter Einsatz des Laserschneiden gefertigte, vorzugsweise metallische, Seitenwände (33a, 33b) aufweisen, zwischen denen jeweils zwei Kopfrollen (34a, 34b, 35a, 35b), eine obere Kopfrolle (34a, 34b) und eine untere Kopfrolle (35a, 35b), drehbar gehalten sind.

19. Rollenbahnkurve (1) nach Anspruch 18, **dadurch gekennzeichnet, dass** alle Kopfrollenachsen (36) der Kopfrollen (34a, 34b, 35a, 35b) im Montagezustand der Koplteile (K1, K2) horizontal ausgerichtet sind.

20. Rollenbahnkurve (1) nach Anspruch 18 oder 19, **dadurch gekennzeichnet, dass** sich in den Seitenwänden (33a, 33b) Schlitze (37a, 37b) befinden, durch die Zungen (38a, 38b) gebildet sind, die zum formschlüssigen und befestigenden Eingriff in die Tragschiene (17) bestimmt sind.

21. Rollenbahnkurve (1) nach einem der Ansprüche 1 bis 20, **dadurch gekennzeichnet, dass** der Flachgurt-Riemen (13) durch einen Antrieb (9) getrieben ist, der einen Elektromotor (10) und eine Antriebsrolle (21), eine Spannrolle (22) sowie Umlenkrollen (24, 25) umfasst, die vorzugsweise in einem Gehäuse (23) befestigt sind.

22. Rollenbahn (31), bestehend aus mehreren geraden und/oder gekrümmten Rollenbahnelementen (32), **dadurch gekennzeichnet, dass** mindestens ein Rollenbahnelement (32) durch eine Rollenbahnkurve (1) nach einem der Ansprüche 1 bis 21 gebildet ist.

23. Rollenbahn (31) nach Anspruch 22, **dadurch gekennzeichnet, dass** mindestens ein weiteres angetriebenes, vorzugsweise gerades, Rollenbahnelement (32) den Flachgurt-Riemen (13) der Rollenbahnkurve (1) als gemeinsames umlaufendes Antriebselement (13) aufweist.

24. Rollenbahn (31) nach Anspruch 23, **dadurch gekennzeichnet, dass** ein gemeinsamer, Antrieb (9) für den Flachgurt-Riemen (13) der Rollenbahnkurve (1) und das weitere angetriebene, vorzugsweise gerade, Rollenbahnelement (32) in dem weiteren angetriebenen Rollenbahnelement (32) angeordnet ist.

25. Rollenbahn (31) nach Anspruch 23 oder 24, **dadurch gekennzeichnet, dass** zum Übertrieb des Flachgurt-Riemens (13) von der Rollenbahnkurve (1) zu dem weiteren angetriebenen Rollenbahnelement (32) an einer Tragschiene (17) der Rollenbahnkurve (1) ein Kopfteil (K2) mit den Merkmalen des Kennzeichens eines der Ansprüche 15 oder 19 bis 21 befestigt ist.

26. Antriebsstrang (AS) für eine Rollenbahnkurve (1) nach einem der Ansprüche 1 bis 21 und/oder für eine Rollenbahn (31) nach einem der Ansprüche 22 bis 25, mit frei drehbaren, mit Neigung ihrer Längsachsen (16) gelagerten Andruckrollen (15) für einen durch ein Obertrum (13a) und ein Untertrum (13b) der Rollenbahnkurve (1) und/oder der Rollenbahn (31) geführten Flachgurt-Riemen (13), wobei die Andruckrollen. (15) auf einer gekrümmten Tragschiene (17) gelagert sind, an der unterseitig ein horizontal verschwenkbares Querstützrad (29) befestigt ist, das aus einer Führungsrolle (26) für den Flachgurt-Riemen (13) zusammen mit einer Rollenachse (27) der Führungsrolle (26) und mit einem Lagerteil (28) eine gemeinsame Baueinheit bildet, wobei die Rollenachse (27) derart ausgerichtet ist, dass der Flachgurt-Riemen (13) im Untertrum (13b) einer kurvenförmigen Rollenbahn-Verlaufsrichtung (3) folgt.

27. Antriebsstrang (AS) nach Anspruch 26, **dadurch gekennzeichnet, dass** die Andruckrollen (15) in im Wesentlichen U-förmigen Lagerböcken (18) mit schräg ausgeführten U-Schenkeln auf der Tragschiene (17) gelagert sind.

28. Antriebsstrang (AS) nach Anspruch 26 oder 27, **dadurch gekennzeichnet, dass** die Tragschiene (17) als RechteckProfil ausgebildet ist.

29. Antriebsstrang (AS) nach einem der Ansprüche 26 bis 28, **dadurch gekennzeichnet, dass** die Tragschiene (17) endseitig durch, insbesondere in die Tragschiene (17) einsteckbare, Kopfteile (K1, K2) abgeschlossen ist, wobei die Kopfteile (K1, K2) wahlweise für einen Eigenantrieb mit dem Flachgurt-Riemen (13) oder für einen Übertrieb des Flachgurt-Riemens (13) ausgelegt sind.

30. Antriebsstrang (AS) nach einem der Ansprüche 26 bis 29, **dadurch gekennzeichnet, dass** die Tragschiene (17) mit einem Antrieb (9) verbunden, insbesondere an ihrer Unterseite verschraubt ist, wobei der Antrieb (9) einen Elektromotor (10) und eine Antriebsrolle (21), eine Spannrolle (22) sowie Umlenkrollen (24, 25) umfasst, die in einem Gehäuse (23) befestigt sind.

**Claims**

1. A driven roller-conveyor curve (1) with a plurality of conveyor rollers (2) which are rotatably arranged one behind the other transversely to the curved roller-conveyor path direction (3), i.e. their longitudinal axes (4) extend from an outside (O) to an inside (I) of the roller-conveyor curve (1), and which are drivable by means of a circulating driving component (13), wherein the circulating driving component (13) is a flat belt (13), the upper strand (13a) of which contacts on the one hand the undersides of the conveyor rollers (2) and on the other hand the upper sides of freely rotatable pressure rollers (15) arranged underneath and between the conveyor rollers (2), wherein the pressure rollers (15) have longitudinal axes (16) which are inclined so that the flat belt (13) is tensioned in a region facing the inside (I), wherein, in a lower strand (13b) of the flat belt (13), the flat belt (13) is deflected and guided with the aid of freely rotatable guide rollers (26) in such a way that a face (13c) of the flat belt (13) is orientated substantially vertically, **characterised in that** the freely rotatable guide rollers (26) are arranged on a supporting rail (17) and **in that** in the lower strand (13b), which extends underneath the supporting rail (17), the flat belt (13) is guided by the guide rollers (26) in such a way that the flat belt (13) follows the curved roller-conveyor path direction (3).

2. A roller-conveyor curve (1) according to claim 1, **characterised in that** the inclination of the longitudinal axes (16) of the pressure rollers (15) is described by an angle of inclination ($\mu$) in relation to the horizontal and wherein ends (15a) of the pressure rollers (15) that face the inside (I) in each case lie higher than ends (15b) that face the outside (O).

3. A roller-conveyor curve (1) according to claim 1 or 2, **characterised in that** the upper strand (13a) of the flat belt (13) extends substantially tangentially to the conveyor rollers (2) and is guided so as to travel over the pressure rollers (15) between two respective conveyor rollers (2) lying side by side and is drawn in by a draw-in amount ($EZ$, $EZ_1$, $EZ_2$).

4. A roller-conveyor curve (1) according to claim 3, **characterised in that** the draw-in amount ($EZ_I$) in a region of the flat belt (13) facing the inside (I) is greater than the draw-in amount ($EZo$) in a region facing the outside (O).

5. A roller-conveyor curve (1) according to any one of claims 1 to 3, **characterised in that** a typical belt length (RL) between adjacent conveyor rollers (2), with central positioning of the pressure rollers (15) between the conveyor rollers (2), in each case constitutes twice the value of belt-portion lengths ($L_I$, $Lo$) between a point of intersection (S1) of the flat belt (13) with a perpendicular axial plane of a conveyor roller (2) and a point of intersection (S2) of the flat belt (13) with a perpendicular axial plane of an adjacent pressure roller (15).

6. A roller-conveyor curve (1) according to claims 4 and 5, **characterised in that**, for the path of the flat belt (13) between a conveyor roller (2) and an adjacent pressure roller (15), the following approximately applies:

$$L_I{}^2 = (A_I/2)^2 + EZ_I{}^2$$

and

$$Lo^2 = (Ao/2)^2 + EZo^2,$$

where $A_I$ is the distance between two adjacent conveyor rollers (2) in the region of the flat belt (13) facing the inside (I) and Ao is the distance in the region facing the outside (O).

7. A roller-conveyor curve (1) according to claim 2 and any one of claims 4 to 6, **characterised in that** the angle of inclination ($\mu$) is produced from the correlation:

$$\mu = \arctan (EZ_I - EZo).$$

8. A roller-conveyor curve (1) according to any one of claims 2 to 7, **characterised in that** the angle of inclination ($\mu$) adopts values in the region of approximately 5° to 30°, preferably in the region of approximately 12° to 18°.

9. A roller-conveyor curve (1) according to any one of claims 1 to 8, **characterised in that** the, in particular cylindrically formed, conveyor rollers (2) are mounted at their ends in side walls (5) of a roller-conveyor frame (6) so as to be rotatable, but vertically non-displaceable.

10. A roller-conveyor curve (1) according to any one of claims 1 to 9, **characterised in that** the circulating driving component (13) is formed as a fabric belt with parallel straight edges and is preferably provided with a rubber coating on one or both sides.

11. A roller-conveyor curve (1) according to any one of claims 1 to 10, **characterised in that** all the pressure rollers (15) are arranged concentrically on a circular arc about a centre of curvature (M) of the roller-conveyor curve (1), in particular at the same angle of inclination ($\mu$).

12. A roller-conveyor curve (1) according to any one of claims 1 to 11, **characterised in that** the pressure rollers (15) are freely rotatably mounted on the supporting rail (17), preferably in substantially U-shaped brackets (18) with obliquely extending U arms.

13. A roller-conveyor curve (1) according to claims 1 to 12, **characterised in that** the supporting rail (17) is formed as a rectangular section.

14. A roller-conveyor curve (1) according to any one of claims 1 to 13, **characterised in that** the supporting rail (17) is vertically adjustably mounted, in particular on transverse members (20) of a roller-conveyor frame (6).

15. A roller-conveyor curve (1) according to any one of claims 1 to 14, **characterised in that** the supporting rail (17) is closed at its ends by head parts (K1, K2) which are insertable into the supporting rail (17), wherein the head parts (K1, K2) are designed either for self-propulsion with the flat belt (13) or for a transfer drive of the flat belt (13).

16. A roller-conveyor curve (1) according to any one of claims 1 to 15, **characterised in that** the flat belt (13) can be tensioned in the lower strand (13b) by means of the guide rollers (26), which are arranged below the supporting rail (17) and are preferably slightly crowned.

17. A roller-conveyor curve (1) according to any one of claims 1 to 16, **characterised in that** a guide roller (26), arranged in the lower strand (13b), and its roller spindle (27) together with a bearing part (28) in each case form a transverse supporting wheel (29) acting as a common structural unit which is fixable to the underside of the supporting rail (17), in particular with horizontal pivotability.

18. A roller-conveyor curve (1) according to any one of claims 15 to 17, **characterised in that** the head parts (K1, K2) have side walls (33a, 33b) which are preferably metallic and in particular are produced by laser cutting and between which two head rollers (34a, 34b, 35a, 35b) are rotatably held in each case, an upper head roller (34a, 34b) and a lower head roller (35a, 35b).

19. A roller-conveyor curve (1) according to claim 18, **characterised in that** all the head-roller axes (36) of the head rollers (34a, 34b, 35a, 35b) are horizontally aligned in the mounted state of the head parts (K1, K2).

20. A roller-conveyor curve (1) according to claim 18 or 19, **characterised in that** slots (37a, 37b) are located in the side walls (33a, 33b) and form tongues (38a, 38b), which are intended to engage positively in the supporting rail (17) and be fastened therein.

21. A roller-conveyor curve (1) according to any one of claims 1 to 20, **characterised in that** the flat belt (13) is driven by a drive (9) which comprises an electric motor (10) and a driving roller (21), a tensioning roller (22) and deflection rollers (24, 25), which are preferably mounted in a housing (23).

22. A roller conveyor (31) comprising a plurality of straight and/or curved roller-conveyor elements (32), **characterised in that** at least one roller-conveyor element (32) is formed by a roller-conveyor curve (1) according to any one of claims 1 to 21.

23. A roller conveyor (31) according to claim 22, **characterised in that** at least one additional driven, preferably straight, roller-conveyor element (32) has the flat belt (13) of the roller-conveyor curve (1) as a common circulating driving component (13).

24. A roller conveyor (31) according to claim 23, **characterised in that** a common drive (9) for the flat belt (13) of the roller-conveyor curve (1) and for the additional driven, preferably straight, roller-conveyor element (32) is arranged in the additional driven roller-conveyor element (32).

25. A roller conveyor (31) according to claim 23 or 24, **characterised in that**, for the transfer of the flat belt (13) from the roller-conveyor curve (1) to the additional driven roller-conveyor element (32), a head part (K2) having the features of the characterising part of any one of claims 15 or 19 to 21 is fastened to a supporting rail (17) of the roller-conveyor curve (1).

26. A drive train (AS) for a roller-conveyor curve (1) according to any one of claims 1 to 21 and/or for a roller conveyor (31) according to any one of claims 22 to 25, having freely rotatable pressure rollers (15) which are mounted with their longitudinal axes (16) in an inclined position and are provided for a flat belt (13) guided by an upper strand (13a) and a lower strand (13b) of the roller-conveyor curve (1) and/or the roller conveyor (31), wherein the pressure rollers (15) are mounted on a curved supporting rail (17), to the underside of which is fixed a horizontally pivotable transverse supporting wheel (29) which forms a common structural unit from a guide roller (26) for the flat belt (13) together with a roller spindle (27) of the guide roller (26) and with a bearing part (28), wherein the roller spindle (27) is orientated in such a way that the flat belt (13) follows a curved roller-conveyor path direction (3) in the lower strand (13b).

27. A drive train (AS) according to claim 26, **characterised in that** the pressure rollers (15) are mounted on the supporting rail (17) in substantially U-shaped brackets (18) with obliquely extending U arms.

28. A drive train (AS) according to claim 26 or 27, **characterised in that** the supporting rail (17) is formed as a rectangular section.

**29.** A drive train (AS) according to any one of claims 26 to 28, **characterised in that** the supporting rail (17) is closed at its ends by head parts (K1, K2) which in particular are insertable into the supporting rail (17), wherein the head parts (K1, K2) are designed either for self-propulsion with the flat belt (13) or for a transfer drive of the flat belt (13).

**30.** A drive train (AS) according to any one of claims 26 to 29, **characterised in that** the supporting rail (17) is connected to a drive (9), which in particular is screwed to its underside, wherein the drive (9) comprises an electric motor (10) and a driving roller (21), a tensioning roller (22) and deflection rollers (24, 25), which are mounted in a housing (23).

**Revendications**

**1.** Courbe de transrouleur entraînée (1), comprenant une pluralité de rouleaux de transport (2) qui sont disposés de façon à pouvoir tourner, les uns après les autres, transversalement au sens de la marche (3) du transrouleur courbe, c'est-à-dire que leurs axes longitudinaux (4) sont orientés depuis un côté extérieur (O) vers un côté intérieur (1) de la courbe de transrouleur (1), les rouleaux de transport pouvant être entraînés au moyen d'un élément d'entraînement tournant (13), dans laquelle l'élément d'entraînement tournant (13) est une courroie plate (13) dont le brin supérieur (13a) touche d'une part les faces inférieures des rouleaux de transport (2) et d'autre part les faces supérieures de rouleaux de pression (15) disposés depuis le bas et entre les rouleaux de transport (2) et pouvant tourner librement, dans laquelle les rouleaux de pression (15) présentent des axes longitudinaux (16) qui sont inclinés de telle sorte que la courroie plate (13) est tendue dans une zone tournée vers le côté intérieur (I), dans laquelle dans un brin inférieur (13b) de la courroie plate (13), la courroie plate (13) est renvoyée et guidée à l'aide de rouleaux de guidage (26) pouvant tourner librement de telle sorte qu'un côté large (13c) de la courroie plate (13) est orientée substantiellement verticalement, **caractérisée en ce que** les rouleaux de guidage (26) pouvant tourner librement sont disposés sur un rail de support (17) et **en ce que** la courroie plate (13) est guidée dans le brin inférieur (13b), qui s'étend au-dessous du rail de support (17) par les rouleaux de guidage (26) de telle sorte que la courroie plate (13) suit le sens de la marche (3) du transrouleur courbe.

**2.** Courbe de transrouleur (1) selon la revendication 1, **caractérisée en ce que** l'inclinaison des axes longitudinaux (16) des rouleaux de pression (15) est décrite par un angle d'inclinaison ($\mu$) par rapport à l'horizontale, et dans laquelle des extrémités (15a) situées en étant tournées vers la face intérieure (I) se trouvent respectivement plus haut que des extrémités (15b) situées en étant tournées vers la face extérieure (O) des rouleaux de pression (15).

**3.** Courbe de transrouleur (1) selon la revendication 1 ou 2, **caractérisée en ce que** le brin supérieur (13a) de la courroie plate (13) s'étend de façon substantiellement tangentielle aux rouleaux de transport (2) et est guidé respectivement entre deux rouleaux de transport (2) situés côte à côte, en passant sur les rouleaux de pression (15), en étant rentré d'une cote de retrait (EZ, $EZ_1$, $EZ_2$).

**4.** Courbe de transrouleur (1) selon la revendication 3, **caractérisée en ce que** la cote de retrait ($EZ_I$) est supérieure dans une zone de la courroie plate (13), tournée vers la face intérieure (I), que la cote de retrait ($EZ_O$) dans une zone tournée vers la face extérieure (O).

**5.** Courbe de transrouleur (1) selon l'une quelconque des revendications 1 à 3, **caractérisée en ce qu'**il résulte une longueur de courroie (RL) caractéristique entre des rouleaux de transport voisins (2) pour une situation centrée des rouleaux de pression (15) entre les rouleaux de transport (2), respectivement comme le double des longueurs de tronçon de courroie ($L_I$, $L_O$) entre un point d'intersection (S1) de la courroie plate (13) avec un plan axial vertical d'un rouleau de transport (2) et un point d'intersection (S2) de la courroie plate (13) avec un plan axial vertical d'un rouleau de pression voisin (15).

**6.** Courbe de transrouleur (1) selon la revendication 4 et 5, **caractérisée en ce que** pour la marche de la courroie plate (13) entre un rouleau de transport (2) et un rouleau de pression (15) voisin, il s'applique approximativement

$$L_I{}^2 = (A_I/2)^2 + EZ_I{}^2$$

et

$$L_O{}^2 = (A_O/2)^2 + EZ_O{}^2,$$

où $A_1$ est la distance entre deux rouleaux de transport (2) voisins dans la zone tournée vers la face intérieure (I) et $A_O$ est la distance dans la zone tournée vers la face extérieure (O) de la courroie plate (13).

**7.** Courbe de transrouleur (1) selon la revendication 2 et l'une quelconque des revendications 4 à 6, **caractérisée en ce que** l'angle d'inclinaison ($\mu$) résulte de la relation

$$\mu = \arctan (EZ_I - EZ_O).$$

8. Courbe de transrouleur (1) selon l'une quelconque des revendications 2 à 7, **caractérisée en ce que** l'angle d'inclinaison ($\mu$) adopte des valeurs dans la plage d'environ 5° à 30°, de préférence dans la plage d'environ 12° à 18°.

9. Courbe de transrouleur (1) selon l'une quelconque des revendications 1 à 8, **caractérisée en ce que** les rouleaux de transport (2), réalisés en particulier de façon cylindrique, sont logés dans des mâchoires latérales (5) d'un cadre de transrouleur (6) en rotation côté extrémité mais sans être mobiles verticalement.

10. Courbe de transrouleur (1) selon l'une quelconque des revendications 1 à 9, **caractérisée en ce que** l'élément d'entraînement tournant (13) est réalisé comme une courroie tissée avec des bords droits, s'étendant en parallèle, et est muni de préférence d'un gommage sur un ou deux côtés.

11. Courbe de transrouleur (1) selon l'une quelconque des revendications 1 à 10, **caractérisée en ce que** tous les rouleaux de pression (15), en particulier avec un angle d'inclinaison identique ($\mu$), sont disposés de façon concentrique sur un arc de cercle autour d'un centre de courbure (M) de la courbe de transrouleur (1).

12. Courbe de transrouleur (1) selon l'une quelconque des revendications 1 à 11, **caractérisée en ce que** les rouleaux de pression (15) sont logés en pouvant tourner librement sur le rail de support (17), de préférence dans des supports de palier (18) substantiellement en forme de U avec des branches de U réalisées de façon oblique.

13. Courbe de transrouleur (1) selon les revendications 1 à 12, **caractérisée en ce que** le rail de support (17) est réalisé comme un profilé rectangulaire.

14. Courbe de transrouleur (1) selon l'une quelconque des revendications 1 à 13, **caractérisée en ce que** le rail de support (17) est fixé de façon réglable en hauteur, en particulier sur des traverses (20) d'un cadre de transrouleur (6).

15. Courbe de transrouleur (1) selon l'une quelconque des revendications 1 à 14, **caractérisée en ce que** le rail de support (17) se termine côté extrémité par des pièces de tête (K1, K2) pouvant s'emboîter dans le rail de support (17), dans laquelle les pièces de tête (K1, K2) sont au choix conçues pour une autopropulsion avec la courroie plate (13) ou pour une transmission de la courroie plate (13).

16. Courbe de transrouleur (1) selon l'une quelconque des revendications 1 à 15, **caractérisée en ce que** la courroie plate (13) peut être tendue dans le brin inférieur (13b) au moyen des rouleaux de guidage (26) disposés sous le rail de support (17) et qui sont de préférence réalisés de façon légèrement bombée.

17. Courbe de transrouleur (1) selon l'une quelconque des revendications 1 à 16, **caractérisée en ce qu'**un rouleau de guidage (26) disposé dans le brin inférieur (13b) et son axe de rouleau (27) forment avec une pièce de palier (28) respectivement une roue d'appui transversal (29) comme une unité modulaire commune, qui peut être fixée en particulier avec une possibilité de pivotement horizontal au niveau de la face inférieure sur le rail de support (17).

18. Courbe de transrouleur (1) selon l'une quelconque des revendications 15 à 17, **caractérisée en ce que** les pièces de tête (K1, K2) présentent des parois latérales (33a, 33b) de préférence métalliques, réalisées en particulier par la mise en oeuvre de la découpe au laser, entre lesquelles respectivement deux rouleaux de têtes (34a, 34b, 35a, 35b), un rouleau de tête supérieur (34a, 34b) et un rouleau de tête inférieur (35a, 35b) sont maintenus de façon à pouvoir tourner.

19. Courbe de transrouleur (1) selon la revendication 18, **caractérisée en ce que** tous les axes de rouleau de tête (36) des rouleaux de tête (34a, 34b, 35a, 35b) sont orientés horizontalement à l'état de montage des pièces de tête (K1, K2).

20. Courbe de transrouleur (1) selon la revendication 18 ou 19, **caractérisée en ce que** dans les parois latérales (33a, 33b) se trouvent des fentes (37a, 37b) à travers lesquelles des languettes (38a, 38b) sont formées qui sont destinées à un engagement de fixation par complémentarité de forme dans le rail de support (17).

21. Courbe de transrouleur (1) selon l'une quelconque des revendications 1 à 20, **caractérisée en ce que** la courroie plate (13) est entraînée par un dispositif d'entraînement (9) qui comprend un moteur électrique (10) et un rouleau d'entraînement (21), un rouleau de tension (22) ainsi que des rouleaux de renvoi (24, 25) qui sont fixés de préférence dans un boîtier (23).

**22.** Transrouleur (31), composé de plusieurs éléments de transrouleur (32) droits et/ou courbes, **caractérisé en ce qu'**au moins un élément de transrouleur (32) est formé par une courbe de transrouleur (1) selon l'une quelconque des revendications 1 à 21.

**23.** Transrouleur (31) selon la revendication 22, **caractérisé en ce qu'**au moins un autre élément de transrouleur (32) entraîné, de préférence droit, présente la courroie plate (13) de la courbe de transrouleur (1) comme un élément d'entraînement (13) tournant commun.

**24.** Transrouleur (31) selon la revendication 23, **caractérisé en ce qu'**un dispositif d'entraînement (9) commun pour la courroie plate (13) de la courbe de transrouleur (1) et l'autre élément de transrouleur (32) entraîné, de préférence droit, sont disposés dans l'autre élément de transrouleur entraîné (32).

**25.** Transrouleur (31) selon la revendication 23 ou 24, **caractérisé en ce que** pour la transmission de la courroie plate (13) de la courbe de transrouleur (1) à l'autre élément de transrouleur entraîné (32) sur un rail de support (17) de la courbe de transrouleur (1), une pièce de tête (K2) ayant les particularités de la partie caractérisante d'une des revendications 15 ou 19 à 21 est fixée.

**26.** Chaîne cinématique (AS) pour une courbe de transrouleur (1) selon l'une quelconque des revendications 1 à 21 et/ou pour un transrouleur (31) selon l'une quelconque des revendications 22 à 25, comprenant des rouleaux de pression (15) pouvant tourner librement et logés avec une inclinaison de leurs axes longitudinaux (16) pour une courroie plate (13) guidée par un brin supérieur (13a) et un brin inférieur (13b) de la courbe de transrouleur (1) et/ou du transrouleur (31), dans laquelle les rouleaux de pression (15) sont logés sur un rail de support courbe (17) sur lequel, au niveau de la face inférieure, une roue d'appui transversale (29) pivotante horizontalement est fixée qui constitue à partir d'un rouleau de guidage (26) pour la courroie plate (13) en conjonction avec un axe de rouleau (27) du rouleau de guidage (26) et avec une pièce de palier (28) une unité modulaire commune, dans laquelle l'axe de rouleau (27) est orienté de telle sorte que la courroie plate (13) suit dans le brin inférieur (13b) un sens de la marche de transrouleur courbe (3).

**27.** Chaîne cinématique (AS) selon la revendication 26, **caractérisée en ce que** les rouleaux de pression (15) sont logés sur le rail de support (17) dans des supports de palier (18) substantiellement en forme de U avec des branches de U réalisées de façon oblique.

**28.** Chaîne cinématique (AS) selon la revendication 26 ou 27, **caractérisée en ce que** le rail de support (17) est réalisé comme un profilé rectangulaire.

**29.** Chaîne cinématique (AS) selon l'une quelconque des revendications 26 à 28, **caractérisée en ce que** le rail de support (17) se termine côté extrémité par des pièces de tête (K1, K2), pouvant en particulier s'emboîter dans le rail de support (17), dans laquelle les pièces de tête (K1, K2) sont conçues au choix pour une autopropulsion avec la courroie plate (13) ou pour une transmission de la courroie plate (13).

**30.** Chaîne cinématique (AS) selon l'une quelconque des revendications 26 à 29, **caractérisée en ce que** le rail de support (17) est relié à un dispositif d'entraînement (9), en particulier vissé sur sa face inférieure, dans laquelle le dispositif d'entraînement (9) comprend un moteur électrique (10) et un rouleau d'entraînement (21), un rouleau de tension (22) ainsi que des rouleaux de renvoi (24, 25) qui sont fixés dans un boîtier (23).

Fig. 1

Fig. 2

Fig. 3a

Fig. 3b

Fig. 4

Fig. 5

Fig. 6

EP 1 832 531 B1

Fig. 7

Fig. 8

19

**Fig. 9**

**Fig. 10**

Fig. 11

Fig. 12

EP 1 832 531 B1

**EP 1 832 531 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9303984 U1
- DE 4209756 A
- US 1975927 A